# FASCICULE DE BREVET EUROPEEN

(11) **EP 0 577 220 B1**
(45) Date de publication et mention de la délivrance du brevet: **23.04.1997**
(21) Numéro de dépôt: 93201908.6
(22) Date de dépôt: 01.07.1993
(51) Int. Cl.: G07C 15/00, G07C 9/00, G06K 19/073, G04C 10/04, G01R 23/00, G04G 3/00

(54) **Dispositif de jeu comprenant une horloge à fonctionnement continu**
Spielvorrichtung mit dauernd funktionierender Uhr
Game device including a continuously working time-piece

(30) Priorité: 01.07.1992 FR 9208099; 01.07.1992 FR 9208100
(43) Date de publication de la demande: 05.01.1994
(73) Titulaire: PHILIPS CARTES ET SYSTEMES, 75013 Paris (FR); Philips Electronics N.V., 5621 BA Eindhoven (NL)
(72) Inventeur: Goudard, Jean-Louis, Société Civile S.P.I.D., F-75008 Paris (FR); Pottier, Denis, Société Civile S.P.I.D., F-75008 Paris (FR); Hoppe, Joseph, Société Civile S.P.I.D., F-75008 Paris (FR)
(74) Mandataire: Chaffraix, Jean

(56) Documents cités:
- EP-A- 0 418 098
- DE-A- 3 023 427
- GB-A- 2 148 135
- GB-A- 2 189 059
- GB-A- 2 228 805
- US-A- 3 806 874
- US-A- 4 047 114
- US-A- 4 068 180
- US-A- 4 365 810
- US-A- 4 592 546
- US-A- 5 073 931
- US-A- 5 089 770

## Description

La présente invention concerne un dispositif de jeu comprenant :
- des moyens de traitement d'informations dans lesquels sont prévus des moyens de mémorisation,
- des moyens d'entrée de données pour enregistrer des premières données de jeu dans lesdits moyens de mémorisation,
- des moyens de chronométrage pour fournir en permanence des états de chronométrage définis à partir de signaux de chronométrage, ayant des moyens d'accumulation d'états de chronométrage couplés avec lesdits moyens d'entrée de données pour entrer un état de chronométrage instantané associé avec lesdites premières données de jeu dans lesdits moyens de mémorisation, et
- des moyens de sortie pour sortir à un instant ultérieur lesdites données de jeu et l'état de chronométrage associé en tant que deuxièmes données d'entrée de jeu.

Les moyens de chronométrage, ou circuits d'horloge, à fonctionnement continu sont bien connus. Certaines nouvelles applications pour de tels moyens imposent de nouvelles exigences, notamment dans le domaine des jeux. Le dispositif décrit dans le brevet des Etats-Unis d'Amérique n° 5 073 931 permet l'enregistrement de paris sur des événements sportifs ou autres qui se déroulent devant le parieur. Comme cela implique, le plus souvent des conséquences financières, l'instant du pari, qui nécessairement doit avoir lieu avant un temps limite déterminé, ne doit pas pouvoir être falsifié. En particulier, un joueur qui fraude peut essayer d'affecter un temps antérieur au pari qu'il effectue, en fait, au moment où il connaît l'issue du jeu.

Un des buts de l'invention est de fournir un dispositif de jeu du genre mentionné pour lequel on a prévu des contremesures à l'encontre de ces comportements de joueurs fraudeurs. Pour atteindre ce but, un dispositif conforme à l'invention est remarquable en ce qu'il comprend en outre des moyens de protection pour contrecarrer physiquement des actions de falsification déterminées à l'encontre desdits moyens de chronométrage, ces moyens de protection comprenant des moyens de contrôle pour contrôler en temps réel la conformité de la fréquence des signaux de chronométrage avec une gamme de fréquences de signaux de chronométrage prédéterminée et des premiers moyens d'invalidation sous la dépendance des moyens de contrôle pour fournir une information d'invalidation persistante à l'intérieur dudit dispositif en cas de non-conformité, due notamment à la diminution ou à l'augmentation de la fréquence des signaux de chronométrage, pour invalider ledit dispositif de jeu.

On remarquera que les mesures de l'invention sont efficaces et bon marché. Elles fournissent un obstacle pratiquement insurmontable aux agissements de joueurs fraudeurs.

Falsifier les moyens de chronométrage peut consister à augmenter ou à diminuer la fréquence d'horloge par rapport à sa valeur nominale. Si les moyens de chronométrage doivent mesurer un laps de temps compris entre un temps de pari et un temps de validation, la personne qui fraude essaiera d'augmenter la fréquence d'horloge durant ce laps de temps. Si les moyens de chronométrage ne sont pas capables de mesurer un laps de temps supérieur audit laps de temps, alors la personne qui fraude essaiera de ralentir la fréquence d'horloge durant le temps qui sépare l'instant de départ et l'instant présent du pari. Le document de brevet anglais n° 2 148 135 décrit, plus spécialement page 8 aux lignes 43 à 53, la réinitialisation du contenu d'une mémoire d'horloge à la détection d'une tentative de fraude. Ceci signifie qu'après une telle réinitialisation le fraudeur peut entreprendre d'autres tentatives plus élaborées sur la même circuiterie.

Selon la présente invention, les actions sont bloquées, tandis que la référence invalide uniquement les résultats dus aux falsifications.

D'autres aspects avantageux de l'invention sont indiqués dans les revendications.

La description suivante, accompagnée des dessins annexés, le tout donné à titre d'exemple non limitatif, fera bien comprendre comment l'invention peut être réalisée.

La figure 1 montre un schéma d'un dispositif conforme à l'invention.

La figure 2 montre un autre exemple de réalisation d'un dispositif conforme à l'invention.

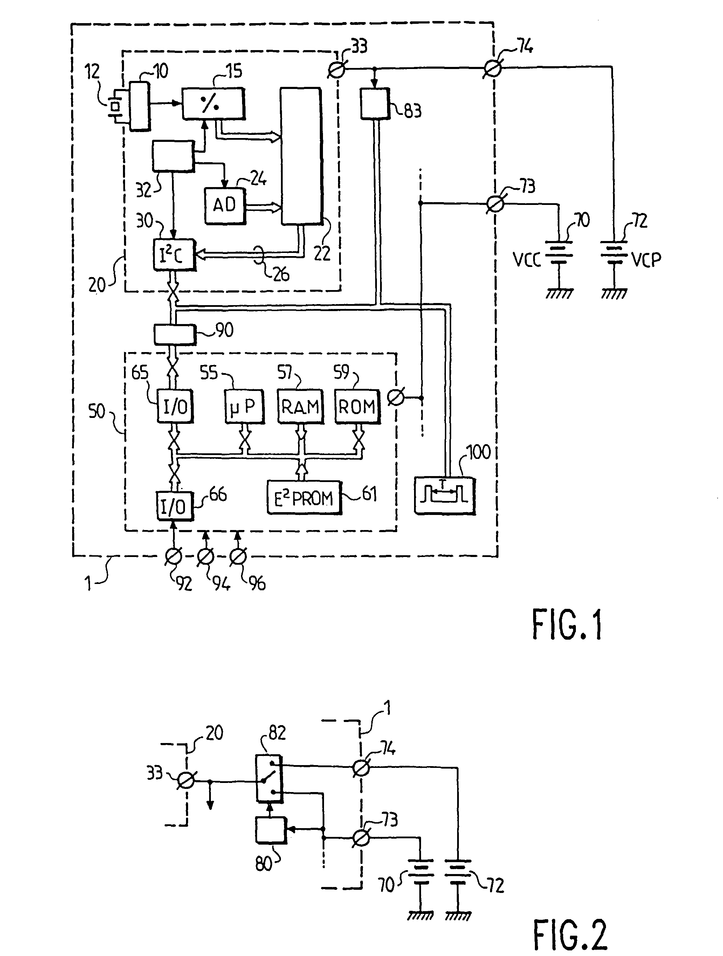

La figure 1 montre un schéma du dispositif conforme à l'invention. Ce dispositif porte la référence 1. Il comprend essentiellement un oscillateur 10 qui est piloté par un quartz 12 et un compteur diviseur 15 formant un circuit d'horloge ou de chronométrage. Ces composants peuvent être une partie d'un circuit intégré 20, disponible dans le commerce sous la référence PCF8583 et fabriqué par Philips Electronics N.V., Eindhoven, Pays-Bas. Les contenus de ce compteur diviseur 15 fournissent des informations de date pour une mémoire vive (mémoire RAM) 22 qui est adressée par un organe d'adressage 24. Ces informations de sortie sont : l'année, le mois, le jour, les heures, les minutes, les secondes, etc... D'autres informations peuvent être contenues dans cette mémoire : des informations d'alarmes, de statut, etc... Les informations contenues dans cette mémoire peuvent être lues sur une ligne 26 connectée à sa sortie. Une interface 30 permet une communication du genre I²C vers l'extérieur du circuit 20. Un organe de logique 32 permet de commander tout le fonctionnement de ce circuit 20. Ce circuit 20 est alimenté par une tension appliquée à une borne 33.

Conformément à l'invention, pour éviter que les informations élaborées par ce circuit 20 soient falsifiées, on a prévu un circuit de sécurité 50 intégré, sous forme hybride ou non, sur le même substrat que le circuit 20.

L'intégration évite qu'une intervention puisse s'effectuer à l'intérieur du circuit 1. Cette intégration peut s'accompagner d'un enrobage de tout le circuit, ce qui rend toute intrusion encore plus improbable.

Le circuit de sécurité est par exemple constitué par un circuit du genre immatriculé sous le n° MC6805SC24. Ce circuit est formé d'un microprocesseur 55 auquel sont rattachées une mémoire RAM 57, une mémoire ROM 59 qui contient les instructions pour le fonctionnement du microprocesseur 55 et également une mémoire EEPROM 61 qui peut contenir différentes données non effaçables par coupure de l'alimentation.

Ce circuit est très usité dans les cartes à puce du genre carte de crédit et son fonctionnement fait partie des connaisances générales. On pourra consulter à cet effet l'ouvrage :

### LES CARTES A MICROCIRCUIT

### TECHNIQUES ET APPLICATIONS de F. GUEZ, C. ROBERT et A. LAURET paru en France aux éditions MASSON.

Pour communiquer, ce circuit comporte un ensemble d'accès 65 et 66 dont une partie 65 est affectée aux communications à l'intérieur du circuit 1 et l'autre partie 66 aux communications vers l'extérieur.

Selon un premier mode de réalisation, le circuit 1 est alimenté par deux sources de tension 70 et 72 par l'intermédiaire de deux bornes d'alimentation 73 et 74. La source 72 est prévue pour alimenter uniquement le circuit 20.

Selon un deuxième mode de réalisation montré à la figure 2, le circuit 1 est alimenté par les deux mêmes sources de tension 70 et 72. Mais, de préférence, c'est la source 70 qui alimente les circuits, même le circuit 20. Si cette source manifeste une défaillance, ceci est détecté par un analyseur de tension d'alimentation 80 (figure 2) qui, dans ce cas, commande un commutateur de tension 82 pour que le circuit 20 soit alimenté par la source de tension 70.

L'importance de ces mesures est que l'on peut garantir une certaine autonomie de ce circuit de chronométrage (quelques années, compte tenu de sa faible consommation) alors que l'alimentation de l'environnement pour lequel il travaille peut nécessiter plusieurs changements de piles (source 70).

Cependant, si la tension d'alimentation du circuit 20 vient à être interrompue, ceci est détecté par un autre analyseur de tension 83 connecté à la borne d'alimentation 33. L'information de rupture de tension peut être reflétée par l'état des données contenues dans la mémoire 22. L'état de cette tension d'alimentation peut également être analysé par le circuit 50 en lui communiquant la détection faite par l'analyseur 83 lors de ses accès I²C au circuit 20.

Pour permettre une communication entre ce bus et le circuit de sécurité 50, un circuit d'interface 90 a été prévu. Le programme assure la communication sur ce bus en respectant le protocole défini par les mesures relatives au bus I²C.

L'information concernant le circuit de chronométrage est rendue accessible via le circuit 50 sur un accès 92. Le circuit 1 porte, outre les bornes d'alimentation 73 et 74, deux autres accès 94 et 96 pour, respectivement, la re-initialisation du circuit et l'application des signaux d'horloge nécessaires au processeur 55.

Le circuit 50 utilise, selon un mode de fonctionnement préférentiel, l'algorithme de cryptagedécryptage DES, tel que défini, par exemple, dans la publication :

### Federal Information Processing Standards Publication (FIPS PUB46) du 15 janvier 1977 du Bureau National des Standards du Ministère du Commerce américain.

Dans la mémoire EEPROM, est enregistrée une clé de chiffrement C.

Ainsi, à l'accès 92 la date DAT peut être en clair, mais elle est accompagnée d'un code DES (C, DAT). Ainsi, on peut vérifier l'intégrité de cette date DAT, si bien entendu on connaît C, toute précaution étant prise pour que cette clé C demeure inconnue à tout fraudeur potentiel.

Il est possible de compliquer le processus en envoyant au circuit d'horloge 1 un aléa "a", de sorte que la date soit accompagnée d'un code DES (C, a, DAT).

Pour éviter cela, conformément à l'invention, on a prévu un circuit de surveillance de la fréquence dudit oscillateur.

Ce circuit est constitué à partir d'un circuit monostable 100. Pendant la durée T de basculement de ce circuit, le nombre d'impulsions de l'oscillateur 10 est compté. Si le compte n'est pas convenable, une information d'invalidité peut être élaborée. On dérive de ce circuit deux impulsions : une pour signaler le début de la durée T, la suivante pour la fin.

La gestion de la surveillance peut être exécutée par le microprocesseur 55 sous la conduite d'un programme contenu dans la mémoire ROM.

Ainsi à un instant donné, un signal, transitant par l'interface 90, véhiculé sur la ligne I²C déclenche le monostable 100 qui délivre une impulsion en direction du circuit de chronométrage 20. Cette impulsion est accompagnée d'une commande pour que le temps défini par le compteur-diviseur 15 soit enregistré dans la mémoire 22. Puis après un laps de temps T survient la deuxième impulsion, ce qui provoque l'enregistrement d'un deuxième contenu dans la mémoire 22. Ensuite, les deux contenus sont soustraits l'un de l'autre et le résultat de la soustraction est comparé à une valeur étalon emmagasinée dans la mémoire EEPROM. Si le résultat de la soustraction est comparable, compte tenu d'une précision acceptable, le circuit de chronométrage est considéré comme intact, sinon une information de non validité est emmagasinée dans la mémoire EEPROM. Le circuit d'utilisation du circuit de chronométrage aura à charge de vérifier la présence ou l'absence de cette information de non validité pour s'assurer de la fiabilité des valeurs données par ce circuit.

La valeur étalon contenue dans la mémoire 61 est obtenue aussi par différence. Cet étalonnage est nécessaire car la durée T peut varier d'un circuit monostable à l'autre, mais sa précision est la même d'un circuit à l'autre.

L'invention concerne aussi tout boîtier de jeu comprenant ce dispositif. Le boîtier est mis en relation, via un circuit d'interface, avec un terminal pour valider les données du pari.

## Revendications

1. Dispositif de jeu comprenant :
- des moyens de traitement d'informations (50) dans lesquels sont prévus des moyens de mémorisation,
- des moyens d'entrée de données (90, 66) pour enregistrer des premières données de jeu dans lesdits moyens de mémorisation,
- des moyens de chronométrage (20) pour fournir en permanence des états de chronométrage définis à partir de signaux de chronométrage, ayant des moyens d'accumulation d'états de chronométrage couplés avec lesdits moyens d'entrée de données pour entrer un état de chronométrage instantané associé avec lesdites premières données de jeu dans lesdits moyens de mémorisation, et
- des moyens de sortie (66) pour sortir à un instant ultérieur lesdites données de jeu et l'état de chronométrage associé en tant que deuxièmes données d'entrée de jeu,
dispositif caractérisé en ce qu'il comprend en outre :
- des moyens de protection (50) pour contrecarrer physiquement des actions de falsification déterminées à l'encontre desdits moyens de chronométrage, ces moyens de protection comprenant des moyens de contrôle (100...) pour contrôler en temps réel la conformité de la fréquence des signaux de chronométrage avec une gamme de fréquences de signaux de chronométrage prédéterminée et des premiers moyens d'invalidation (50) sous la dépendance des moyens de contrôle (100...) pour fournir une information d'invalidation persistante à l'intérieur dudit dispositif en cas de non-conformité due, notamment à la diminution ou à l'augmentation de la fréquence d'horloge, pour invalider ledit dispositif de jeu.

2. Dispositif de jeu selon la revendication 1, caractérisé en ce que lesdits moyens de protection comprennent en outre des moyens de blocage (50) pour bloquer tout accès depuis lesdits moyens d'entrée vers les moyens d'accumulation, par lesquels les changements externes de l'état de chronométrage sont évités.

3. Dispositif de jeu selon la revendication 1 ou 2, caractérisé en ce que lesdits moyens de protection impliquent des moyens d'encapsulation pour que les moyens de chronométrage (20) et les moyens d'accumulation d'états soient mis dans la même capsule.

4. Dispositif de jeu selon l'une des revendications 1 à 3, caractérisé en ce que lesdits moyens de protection comprennent des seconds moyens de contrôle (83) pour contrôler la conformité du voltage et/ou du courant de la source d'alimentation et des seconds moyens d'invalidation sous la dépendance des seconds moyens de contrôle pour fournir une information supplémentaire d'invalidation permanente à l'intérieur dudit dispositif de jeu lors de la détection d'une non-conformité, par lesquels l'augmentation ou la diminution externe de ladite fréquence d'horloge, en conséquence d'une variation de ladite tention et/ou du courant, invalide le dispositif de jeu.

5. Dispositif de jeu selon la revendication 4, caractérisé en ce qu'il est prévu, en plus de la première source d'alimentation (70) pour les moyens de chronométrage, au moins une deuxième source de tension (72) pour d'autres moyens.

6. Dispositif de jeu selon la revendication 4 ou 5, caractérisé en ce qu'il est prévu au moins une source d'alimentation de secours pour les moyens de chronométrage mise en service par lesdits seconds moyens de contrôle.

7. Boîtier de jeu contenant un dispositif selon la revendication 1 à 6 et ayant des moyens d'interface pour communiquer avec un dispositif de terminal.

## Patentansprüche

1. Spielvorrichtung mit :
- Informationsverarbeitungsmitteln (50), in denen Speichermittel vorgesehen sind,
- Dateneingabemitteln (90, 66) zur Registrierung der ersten Spieldaten in den besagten Speichermitteln,
- Zeitmessungsmitteln (20) zur permanenten Lieferung der Zeitmessungszustände, die von den Zeitmessungssignalen definiert werden, mit Zwischenspeichermitteln für die Zeitmessungszustände, gekoppelt mit den besagten Dateneingabemitteln, um einen momentanen Zeitmessungszustand verbunden mit den besagten ersten Spieldaten in die besagten Speichermittel einzugeben, und
- Ausgabemitteln (66), um zu einem späteren Zeitpunkt die besagten Spieldaten und den Zeitmessungszustand verbunden als zweite Spieleingabedaten auszugeben,
Spielvorrichtung mit dem Merkmal, zusätzlich folgendes zu enthalten :
- Schutzmittel (50) zur physischen Verhinderung bestimmter Fälschungsvorgänge in bezug auf die besagten Zeitmessungsmittel, wobei diese Schutzmittel Prüfvorrichtungen (100...) enthalten, um in Echtzeit die Übereinstimmung der Frequenz der Zeitmessungssignale mit einem vorbestimmten Frequenzbereich an Zeitmessungssignalen zu prüfen, und in Abhängigkeit zu den Prüfmitteln (100...) erste Annulierungsmittel (50), um im Innern der besagten Vorrichtung im Falle der Nicht-Übereinstimmung aufgrund insbesondere der Verminderung oder Erhöhung der Uhrfrequenz die besagte Spielvorrichtung zu annulieren.

2. Spielvorrichtung laut Anspruch 1, mit dem Merkmal, daß die besagten Schutzmittel außerdem Blockiermittel (50) für die Blockierung jeglichen Zugangs von den besagten Eingabemitteln zu den Speichermitteln enthalten, wodurch externe Änderungen der Zustands der Zeitmessung verhindert werden.

3. Spielvorrichtung laut Anspruch 1 oder 2, mit dem Merkmal, daß die besagten Schutzmittel Verkapselungsmittel beinhalten, damit sich die Zeitmessungsmittel (20) und die Speichermittel in derselben Kapsel befinden.

4. Spielvorrichtung laut einem der Ansprüche 1 bis 3, mit dem Merkmal, daß die besagten Schutzmittel zweite Prüfmittel (83) enthalten, um die Übereinstimmung der Spannung und/oder des Stroms der Stromzufuhrquelle und der zweiten Annulierungsmittel abhängig von den zweiten Prüfmitteln zu prüfen, um bei Nicht-Übereinstimmung im Innern der besagten Spielvorrichtung eine zusätzliche permanente Annulierungsinformation zu liefern, wobei die externe Erhöhung oder Verminderung der besagten Uhrfrequenz aufgrund einer Änderung der besagten Spannung und/oder des Stroms die Spielvorrichtung annuliert.

5. Spielvorrichtung laut Anspruch 4, mit dem Merkmal, daß zusätzlich zu der ersten Versorgungsquelle (70) für die Zeitmessungsmittel mindestens eine zweite Spannungsquelle (72) für andere Mittel vorgesehen ist.

6. Spielvorrichtung laut Anspruch 4 oder 5, mit dem Merkmal, daß mindestens eine Notversorgungsquelle für die Zeitmessungsmittel vorgesehen ist, die von den besagten zweiten Prüfmitteln in Gang gesetzt wird.

7. Spielgehäuse mit einer Vorrichtung laut dem Anspruch 1 bis 6, mit Schnittstellenmitteln zur Kommunikation mit einer Vorrichtung des Terminals.

## Claims

1. A gaming device comprising:
- data processing means (50) including storage means;
- data entry means (90, 66) for entering first gaming data into said storage means,
- free-running clock means (20) for permanently providing clock states defined by clock signals, having clock state accumulation means coupled to said data entry means for entering an instantaneous clock state associated with said gaming data into said storage means, and
- readout means (66) for reading out, at a later instant said gaming data and the associated clock state as second game entry data,
characterized in that the device also comprises protection means (50) for physically blocking predetermined tampering actions with respect to said free-running clock means, said protection means comprising monitoring means (100...) for real-time monitoring the conformity of the clock signal frequency with a predetermined clock signal frequency range, and first invalidation means (50) controlled by the monitoring means (100...) for generating persistent invalidation information within said device upon detection of non-conformity, notably by way of lowering or raising the clock frequency for invalidating said gaming device.

2. A gaming device as claimed in Claim 1, characterized in that said protection means also comprise blocking means (50) for blocking access from said data entry means to the accumulation means, whereby external changes of the clock state are avoided.

3. A gaming device as claimed in Claim 1 or 2, characterized in that said protection means comprise packaging means in order that the clock means (20) and the clock state accumulation means are co-packaged.

4. A gaming device as claimed in any of Claims 1 to 3, characterized in that said protection means comprise second monitoring means (83) for monitoring the conformity of the voltage and/or current from the power supply source and from second invalidation means controlled by the second monitoring means for generating further invalidation information within said gaming device upon detection of non-conformity, whereby external lowering or raising of said clock frequency through varying said voltage and/or current invalidates the gaming device.

5. A gaming device as claimed in Claim 4, characterized in that in addition to the first power supply source (70) for the clock means there is provided at least one second power supply source (72) for further means.

6. A gaming device as claimed in Claim 4 or 5, characterized in that there is provided at least one emergency power supply source for the clock means, which is activated by said second monitoring means.

7. A game box comprising a device as claimed in Claims 1 to 6, and having interface means for communicating with a terminal device.
